Europäisches Patentamt

European Patent Office

Office européen des brevets

(19)

(11) **EP 0 669 729 B1**

(12) **FASCICULE DE BREVET EUROPEEN**

(45) Date de publication et mention
de la délivrance du brevet:
**04.09.2002 Bulletin 2002/36**

(51) Int Cl.⁷: **H04B 7/005**

(21) Numéro de dépôt: **95400356.2**

(22) Date de dépôt: **21.02.1995**

(54) **Procédé permettant une égalisation multivoie dans un récepteur radioélectrique, en présence d'interférences et de multitrajets de propagation**

Verfahren zur Durchführung von einer mehrkanalen Entzerrung in einem Rundfunkempfänger bei Störungen und Mehrwegeausbreitung

Method for implementing multichannel equalisation in a radio receiver in the presence of interferece and multipath propagation

(84) Etats contractants désignés:
**DE GB IT**

(30) Priorité: **25.02.1994 FR 9402193**

(43) Date de publication de la demande:
**30.08.1995 Bulletin 1995/35**

(73) Titulaire: **Thales**
**75008 Paris (FR)**

(72) Inventeurs:
• **Vila, Pierre**
**F-Courbevoie Cedex (FR)**
• **Pirez, Didier**
**F-Courbevoie Cedex (FR)**
• **Pipon, François**
**F-Courbevoie Cedex (FR)**

(74) Mandataire: **Lincot, Georges et al**
**Thomson-CSF Propriété Intellectuelle,**
**Département Brevets,**
**13, Avenue du Président Salvador Allende**
**94117 Arcueil Cédex (FR)**

(56) Documents cités:
• **PROCEEDINGS OF 1991 INTERNATIONAL CONFERENCE ON COMMUNICATIONS - ICC '91 23-26 June 1991, Denver (US) NEW YORK (US)**
• **JOURNAL OF THE ACOUSTICAL SOCIETY OF AMERICA, vol. 94,no. 3, Septembre 1993 NEW YORK US, pages 1621-1631, M.STOJANOVIC ET AL. 'ADAPTIVE MULTICHANNEL COMBINING AND EQUALIZATION FOR UNDERWATER ACOUSTIC COMMUNICATIONS'**
• **PROCEEDINGS OF 1993 43rd VEHICULAR TECHNOLOGY CONFERENCE 18-20 May 1993, Secaucus (US) NEW YORK (US)**

**Description**

La présente invention concerne un procédé permettant une égalisation multivoie dans un récepteur radioélectrique consistant en une estimation d'un canal de transmission lors de la réception d'un signal radioélectrique numérique de type modulation linéaire série (ou assimilée), sur au moins deux voies en présence de plusieurs trajets de propagation, appelés également multitrajets, et en présence de sources interférentes, appelés également brouilleurs.

L'invention concerne également un récepteur radioélectrique multivoie utilisant un tel procédé.

Le signal transmis est issu de la modulation en phase et/ou en amplitude d'une porteuse par une suite de symboles dont une partie, connue du récepteur, est dénommée "séquences d'apprentissage".

Le canal peut être celui des transmissions dans la gamme des hautes fréquences, HF, permettant des communications à longue distance (des centaines à des milliers de kilomètres). Les multitrajets du canal HF sont dus aux réflexions multiples du signal sur les couches ionosphériques de l'atmosphère et le sol. Le canal peut être aussi celui des transmissions dans la gamme très hautes fréquences, UHF, qui est utilisé dans les communications radiomobiles (GSM par exemple). Les multitrajets du canal radiomobile sont dus aux réflexions multiples sur les surfaces de bâtiments et sur le relief terrestre.

Quant au brouillage, il peut être volontaire (brouillage large bande par exemple) ou involontaire (autres signaux de transmissions utilisant la même bande de fréquence).

Dans de nombreux systèmes actuellement en service, l'adaptation aux caractéristiques du canal de transmission est rendue possible par l'insertion dans la forme d'onde de séquences d'apprentissage connues du récepteur. Différentes solutions sont alors possibles pour réaliser l'égalisation adaptative du signal utile reçu. Plusieurs solutions sont notamment décrites dans un article de J.G. Proakis intitulé "Adaptive Equalization for TDMA Digital Mobile Radio", IEEE Trans. on Vehicular Techn., vol.40, n°2, Mai 1991. Le traitement de référence est une égalisation fondée sur un algorithme de Viterbi associée à une estimation du canal de transmission à l'aide des séquences d'apprentissage. Cette solution est couramment utilisée dans les systèmes GSM.

Dans le contexte des transmissions HF à hauts débits (2400 bauds), on lui préfère des solutions moins complexes. Elles sont fournies par une version simplifiée de l'algorithme de Viterbi, le M-algorithme notamment décrit dans un article de A.Baier et G. Heinrich, intitulé "Performance of M-algorithm MLSE equalizers in frequency-selective fading mobile radio channels", Proc. of 1989 International Conference on Communications, ICC'89, ou encore par un égaliseur à décision dans la boucle connu également sous la dénomination anglo-saxonne DFE abréviation pour "Decision Feedback Equalizer". Ce dernier peut être réalisé à partir de filtres auto-adaptatifs, adaptés par un algorithme du type moindres carrés récursifs de préférence à un algorithme du gradient pour des raisons de vitesse de convergence, ou calculé à partir d'une estimation du canal de transmission comme dans un article de P.K Shukla et L.F. Turner, intitulé "Channel-estimation-based adaptive DFE for fading multipath radio channels", IEE Procedings-l, vol.138, n°6, décembre 1991.

En présence de "fading", la variation de la puissance des signaux reçus entraîne une dégradation des performances en terme de Taux d'Erreur Binaire, TEB. L'usage de plusieurs antennes dans des égaliseurs à diversité d'antennes permet de compenser cette dégradation en tirant profit de la différence entre les canaux de transmissions correspondant aux différentes antennes.

En présence de brouillage, ces techniques d'égalisation deviennent rapidement inefficaces, et des techniques spécifiques de lutte anti-brouillage sont nécessaires, telles que le codage correcteur d'erreur, l'excision de brouillage par filtrage à encoches ou l'utilisation de liaisons à évasion de fréquence. Ces techniques, utilisées dans de nombreux systèmes opérationnels, sont malgré tout limitées lorsque les interférences sont fortes et occupent toute la bande du signal utile. Dans ces conditions, il convient d'utiliser des moyens de lutte anti-brouillage plus performants basés sur l'utilisation des techniques de filtrage d'antennes.

Les techniques de filtrage d'antennes, apparues au début des années 60 et dont une synthèse est présentée dans la thèse de doctorat de l'université de Paris sud, juin 1991 de P. Chevalier, intitulée "Antenne adaptative: d'une structure linéaire à une structure non linéaire de Volterra", visent à combiner les signaux reçus par les différents capteurs constituant l'antenne, de façon à optimiser la réponse de celle-ci au scénario de signal utile et de brouilleurs.

Les conditions de propagation et de brouillage pouvant évoluer au cours du temps, il est nécessaire de pouvoir adapter l'antenne en temps réel à ces variations par l'utilisation d'une technique de filtrage d'antenne particulière appelée "antenne adaptative". Une antenne adaptative est une antenne qui détecte les sources d'interférences automatiquement, en construisant dans leur direction des trous de son diagramme de rayonnement, tout en améliorant la réception de la source utile, sans connaissance a priori sur les interférences et à partir d'une information minimale sur le signal utile. De plus, grâce à la capacité de poursuite des algorithmes utilisés, une antenne adaptative est capable de répondre automatiquement à un environnement changeant.

Jusqu'à une période très récente, il a toujours été envisagé dans les systèmes de transmission un fonctionnement indépendant des techniques d'égalisation adaptative monocapteur et d'antenne adaptative, ce qui conduit à des performances sous-optimales. Ainsi, le système décrit dans un article de R. Dobson intitulé "Adaptive antenna array", Brevet n° PCT/AU85/00157, Fev.1986, qui discrimine signaux utiles et brouilleurs par le temps, parvient à réjecter efficacement les interférences mais ne cherche pas à optimiser le rapport signal utile/bruit.

Dans un contexte de transmission, et lorsque des séquences d'apprentissage sont introduites dans la forme d'onde, il est préférable d'utiliser des techniques de traitement d'antenne à discrimination par la modulation car celles-ci permettent d'optimiser le rapport signal utile/bruit, tout en évitant la mise en oeuvre d'une étape de goniométrie. Mais la plupart de celles qui sont employées aujourd'hui utilisent des poids complexes sur chacun des capteurs de l'antenne adaptative. Une telle antenne permet la réjection des interférences, mais en présence de multitrajets de propagation :

- elle "pointe" dans la direction de l'un des trajets, c'est-à-dire remet en phase les contributions de ce trajet sur les différents capteurs (pour des capteurs omnidirectionnels, on obtient donc un gain en rapport signal à bruit de 10 log $N$, où $N$ est le nombre de capteurs utilisés),
- et cherche à réjecter les trajets décorrélés de celui-ci, perdant ainsi l'énergie associée à ces trajets.

Afin d'améliorer les performances de cette dernière technique de traitement d'antenne, l'idée est de la coupler à une technique d'égalisation monocapteur. Des égaliseurs multivoies sont ainsi obtenus comportant une partie spatiale, composée de différents filtres disposés sur chacune des voies de réception, et une partie temporelle disposée en sortie de la partie spatiale.

Des récepteurs traitant conjointement les signaux issus de plusieurs antennes ont déjà été proposés pour combattre le "fading" sélectif engendré par les multitrajets, en environnement non brouillé ; ce sont les égaliseurs à diversité spatiale. Comme en égalisation monocapteur, les solutions les plus souvent utilisées comprennent soit un algorithme de viterbi, soit une structure DFE minimisant l'Erreur Quadratique Moyenne (EQM) entre une sortie obtenue et une sortie souhaitée.

Des égaliseurs à diversité spatiale fondés sur un algorithme de Viterbi sont proposés notamment dans:

- un article de P. Balaban & J. Salz intitulé "Optimum Diversity Combining and Equalization in Digital Data Transmission with Applications to Cellular Mobile Radio - Part I: Theoretical Considerations", IEEE Trans.on Com., vol. 40, n° 5, pp.885-894, mai 1992,
- un brevet de G.P. Labedz et al. (Motorola, Inc., Schaumburg, Iℓℓ., US) intitulé "Method and apparatus for diversity reception of time-dispersed signals", brevet 12.12.91 EP430481.A2,
- un brevet de Okanoue et Kazuhiro (Nec Corp., Tokyo, JP) intitulé, "Noise-immune space diversity receiver", brevet 29.03.91 EP 449327.A2 et,
- un article de P. Jung, M. Na β han et Y. Ma, intitulé "Comparison of Optimum Detectors for Coherent Receiver Antenna Diversity in GSM Type Mobile Radio Systems", Proc. of the 4th International Symposium on Personal, Indoor and Mobile Radio Communications, PIRMC'93, Yokohama, Japan, 1993.

Leur mise en oeuvre nécessite la connaissance a priori de la réponse impulsionnelle du canal de transmission. En absence de brouillage, la réponse impulsionnelle du canal est estimée à partir des symboles connus et des symboles décidés au fur et à mesure par l'égaliseur.

Des égaliseurs à diversité spatiale à structure DFE sont proposés dans l'article de P. Balaban & J. Salz et dans un article de K.E. Scott et S.T. Nichols, intitulé "Antenna Diversity with Multichannel Adaptive Equalization in Digital Radio", Proc. of International Conf. on Com., ICC'91, New York, USA, Juin 1991.

Le dernier égaliseur cité est réalisé avec des filtres auto-adaptatifs, dont les coefficients sont adaptés par un algorithme des moindres carrés. Pour l'égaliseur présenté par P. Balaban & J. Salz, les coefficients sont calculés à partir d'une estimée du canal de transmission. Le problème de l'environnement brouillé n'est pas abordé dans l'étude de ces égaliseurs.

Les égaliseurs à diversité spatiale cités ont été conçus pour combattre le "fading" sélectif engendré par les multitrajets du canal de transmission, mais nullement pour réjecter les interférences. Toutefois, parmi ceux-ci, seul l'égaliseur à diversité spatiale auto-adaptatif proposé par K. Scott & S. Nichols a la capacité de remplir cette dernière fonction. On obtient alors l'antenne transverse et récursive ayant fait l'objet de la Thèse de doctorat de l'ENST, juin 1988 de L. Féty intitulée "Méthodes de traitement d'antenne adaptées aux radiocommunications".

Cependant, ce traitement ne peut s'appliquer qu'à des canaux de transmission dont l'étalement temporel des multitrajets relativement à la durée symbole est réduit, ce qui n'est généralement pas le cas dans les transmissions HF à hauts débits et dans le système GSM. En effet, dans ce contexte, le nombre de coefficients à adapter est trop important pour que l'algorithme d'adaptation puisse converger sur une séquence connue d'apprentissage. Les autres égaliseurs à diversité spatiale présentés dépendent de l'estimation du canal de transmission guère réalisable en présence d'interférences. En outre ces égaliseurs n'intègrent pas de fonction de réjection d'interférences.

Le but de l'invention est de pallier les inconvénients précités.

A cet effet l'invention a pour objet un procédé permettant une égalisation multivoie consistant en une estimation d'un canal de transmission d'un signal radioélectrique numérique organisé en trames successives comportant au moins une séquence d'apprentissage formée de symboles connus et une séquence d'information formée de symboles utiles, caractérisé, en ce qu'il consiste, en présence de multitrajets de propagation et d'interférences,:

- à transformer le signal radioélectrique reçu sur au moins deux voies de réception d'au moins une antenne, en un signal équivalent en bande de base et discrétisé,
- à filtrer par un filtrage passe-bas chaque signal discrétisé en bande de base,
- dans un traitement préalable, à décorréler spatialement la composante bruit de fond plus interférences du signal reçu,
- à filtrer et à combiner par un filtrage d'antennes, les signaux issus de chaque canal estimé,
- à calculer à partir des estimées du canal de transmission correspondant respectivement à chacune des voies, une égalisation monodimensionnelle au rythme symbole des séquence d'apprentissage, qui décide des symboles transmis
- à estimer le canal de transmission à partir de chacune des voies prétraitées,
- et à mettre à jour suivant un séquencement déterminé des trames, le traitement préalable, le filtrage d'antennes et l'égalisation, ainsi que l'estimation du bruit porté par chaque canal après le traitement préalable, à partir de l'estimation de canal.

L'invention a également pour objet un récepteur radioélectrique multivoie mettant en oeuvre une égalisation à diversité spatiale fondée sur une estimation du canal de transmission, et recevant un signal radioélectrique numérique organisé en trames successives comportant au moins une séquence d'apprentissage formée de symboles connus du récepteur et une séquence d'information formée de symboles utiles, caractérisé en ce que le récepteur comporte, pour l'estimation du canal de transmission en présence d'interférences et de multitrajets de propagation :

- au moins une antenne comportant au moins deux capteurs formant chacun une voie de réception,
- des moyens de transformation du signal reçu sur chaque voie en un signal équivalent en bande de base discrétisé,
- des moyens de filtrage comportant un filtre passe-bas disposé sur chaque voie, pour filtrer chaque signal discrétisé en bande de base,
- des moyens de traitement préalable des signaux associés respectivement à chaque capteur comportant des blocs de projection projetant les signaux issus des filtres passe-bas sur une base formée des vecteurs propres d'une matrice de corrélation spatiale du bruit de fond plus interférences,
- des moyens d'estimation du canal de transmission associé à chaque voie après traitement préalable,
- des moyens d'estimation du bruit présent sur chaque canal après traitement préalable,
- des moyens de filtrage d'antennes comportant un filtre adapté à chaque canal et des moyens de combinaison des signaux de sorties respectifs à chaque filtre échantillonnés au rythme symbole et pondérés par l'inverse de leur puissance de bruit calculée par les moyens de traitement préalable, permettant de combattre conjointement les interférences et les multitrajets de propagation,
- des moyens d'égalisation monodimensionnelle calculant l'égalisation directement à partir des estimées du canal correspondant respectivement à chacune des voies et permettant de réduire l'IIS et de décider des symboles transmis, et
- des moyens de mise à jour des moyens de traitement préalable, des moyens de filtrage d'antennes, des moyens d'égalisation, et des moyens d'estimation du bruit présent sur chaque canal, suivant un séquencement déterminé.

La présente invention propose un récepteur multivoie remplissant conjointement deux fonctions à partir de signaux issus de plusieurs voies :

- la première fonction est la réduction des distorsions engendrées par les multitrajets sur le signal transmis. En effet, les multitrajets du canal de transmission sont à l'origine de deux distorsions sur le signal.

La première est la sélectivité en fréquence (sur la bande de réception). Elle se traduit par l'Interférence Inter-Symboles, IIS, en réception lorsque l'étalement temporel des multitrajets dépasse la durée d'un symbole. Dans ce cas, le canal est dit dispersif en temps.

La seconde distorsion engendrée par les multitrajets est due à leur variation au cours du temps. La variation des multitrajets est responsable d'une dispersion fréquentielle du canal de transmission, appelée étalement Doppler. Elle se traduit par une variation de la puissance reçue, voire un évanouissement des trajets du signal transmis, appelé "fading". Par conséquent, il est nécessaire de procéder à l'égalisation des signaux reçus.

- la deuxième fonction remplie par le récepteur multivoie selon l'invention est la réjection des interférences. En effet, les performances du démodulateur en terme de TEB se dégradent avec la diminution du rapport Energie du signal reçu par Symbole sur Bruit (bruit de fond plus interférences). Il est donc peu robuste au brouillage.

Ainsi les deux fonctions remplies par le récepteur multivoie selon l'invention permettant l'égalisation des signaux reçus et la réjection des interférences.

D'autres caractéristiques et avantages de l'invention apparaîtront plus clairement dans la description qui suit faite en regard des dessins annexés qui représentent :

- la figure 1, un bloc diagramme des principales étapes du procédé selon l'invention,
- la figure 2, un schéma fonctionnel d'un récepteur multivoie selon l'invention,
- la figure 3, un schéma fonctionnel des moyens de passage en bande de base d'un récepteur multivoie selon l'invention,
- les figures 4 et 5 respectivement un schéma fonctionnel des moyens de traitement préalable d'un récepteur multivoie selon l'invention,
- la figure 6, le schéma fonctionnel du module de filtrage d'antennes d'un récepteur multivoie selon l'invention, et
- la figure 7, un séquencement des mises à jour des différents traitements effectués par un récepteur multivoie selon l'invention.

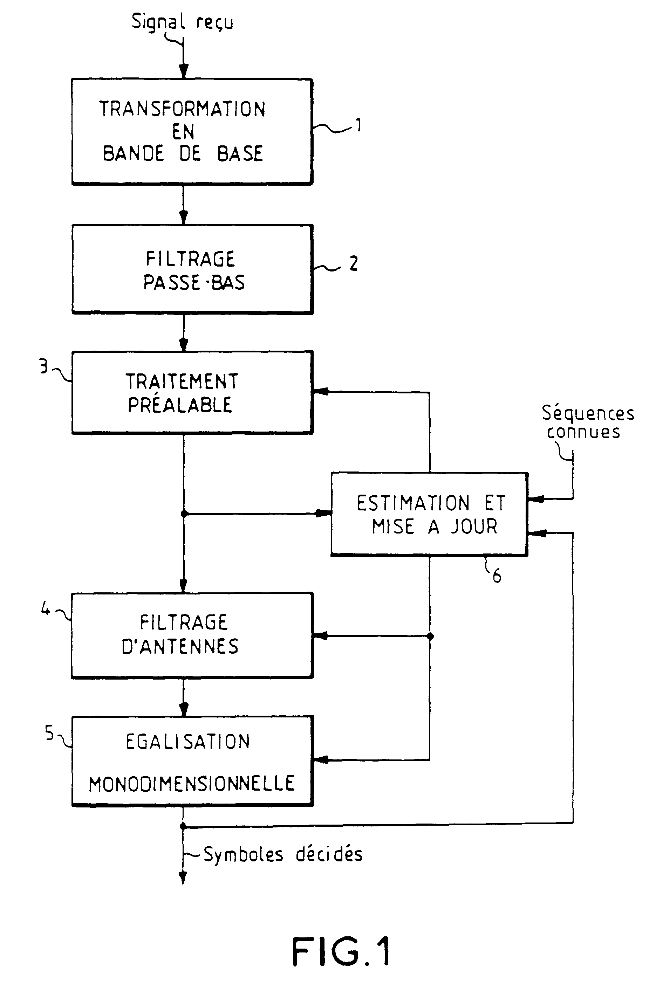

Le procédé selon l'invention comporte six étapes principales 1 à 6 illustrées à la figure 1.

La première étape 1 consiste à transformer le signal présent sur chaque voie de réception en un signal équivalent en bande de base et discrétisé.

La deuxième étape 2 consiste à filtrer par un filtrage passe-bas chacun des signaux discrétisés en bande de base.

La troisième étape 3 consiste à effectuer un traitement préalable sur les signaux associés à chacune des antennes par projection sur une nouvelle base. La base est formée des vecteurs propres de la matrice de corrélation spatiale du bruit de fond plus interférences. La décomposition des signaux d'entrée sur la base propre assure la décorrélation spatiale de la composante "interférences" et la décroissance rapide du niveau de brouillage. Ainsi les voies dont la valeur propre est faible correspondent à des signaux dont la composante "interférences" est faible, voire de puissance inférieure à celle du bruit de fond. Ce type de décomposition assure aussi l'absence de perte d'informations puisque la transformation opérée est unitaire, donc inversible.

La quatrième étape 4 consiste à filtrer les voies par un filtrage d'antennes comprenant tout d'abord un filtrage temporel effectué sur chaque voie, puis une combinaison des différentes sorties. Le filtrage temporel est le filtrage adapté au canal de transmission sur chacune des voies et le résultat est délivré au rythme symbole. Les sorties des filtres adaptés sont ensuite combinées. La combinaison correspondante consiste à additionner les sorties de chaque filtre (bruit de fond plus interférences) après les avoir pondérées par l'inverse de la puissance de bruit.

La cinquième étape 5 consiste à égaliser chaque voie par une égalisation monodimensionnelle au rythme symbole qui décide les symboles transmis. Cette dernière peut être notamment fondée sur un algorithme de Viterbi ou une égalisation DFE calculée directement à partir de l'estimée du canal correspondant à chacune des voies.

Enfin, la sixième étape 6 consiste à estimer le canal de transmission sur chacune des voies prétraitées. Elle reçoit les signaux issus du traitement préalable, les symboles des séquences connues et les symboles décidés et permet ainsi la mise à jour des différents traitements réalisés à la réception d'un signal, c'est-à-dire le traitement préalable, le filtrage d'antennes et l'égalisation monodimensionnelle.

Afin d'intégrer la fonction de réjection à la fonction d'égalisation à diversité spatiale fondée sur l'estimation du canal de transmission, le procédé selon l'invention ajoute un traitement préalable des signaux issus des capteurs. Le traitement préalable 3 consiste à décorréler spatialement la composante bruit de fond plus interférences des signaux d'entrée. Il permet de disposer de voies où la contribution en puissance des interférences a nettement diminué. Ainsi sur ces voies, l'estimation 6 du canal de transmission peut être efficacement entreprise.

Le traitement préalable 3 est suivi d'un filtrage d'antennes 4 mettant en oeuvre un ensemble de filtres adaptés au canal de transmission, un sur chaque voie, puis d'une combinaison de leurs sorties qui est fournie au rythme symbole. La combinaison des sorties des filtres adaptés au canal se fait en fonction de l'inverse de la puissance relative du bruit de fond plus interférences. Ainsi les sorties fortement brouillées ne sont pas ou peu prises en compte tandis que les sorties au brouillage faible seront prépondérantes dans le résultat de la combinaison.

Ensuite, comme en égalisation à diversité spatiale en environnement non brouillé, le résultat du filtrage d'antennes précédent subit une égalisation monodimensionnelle au rythme symbole qui "décide" les symboles transmis.

Ainsi le rôle du filtrage d'antennes 4 est de maximiser la contribution en puissance du symbole courant à décider par rapport à celle du bruit de fond plus interférences, et le rôle de l'égalisation monodimentionnelle 6 est de traiter l'IIS et le bruit résiduel. L'égalisation à diversité spatiale est rendue robuste au brouillage grâce au traitement préalable 3.

Lorsque la combinaison est faite selon le principe du Maximal Ratio Combining (MRC) utilisé en égalisation à diversité spatiale notamment décrit dans un livre de W.C. Jakes Jr. et al, intitulé "Microwave Mobile Communications", Ed. Wiley, New York, 1974, et que le bruit ramené par les interférences est un bruit blanc dans la bande de réception, le filtrage d'antennes alors effectué est le Filtrage Adapté Multidimensionnel. Ce traitement peut être isolé dans bon nombre de récepteurs multivoie traitant conjointement le brouillage et les multitrajets.

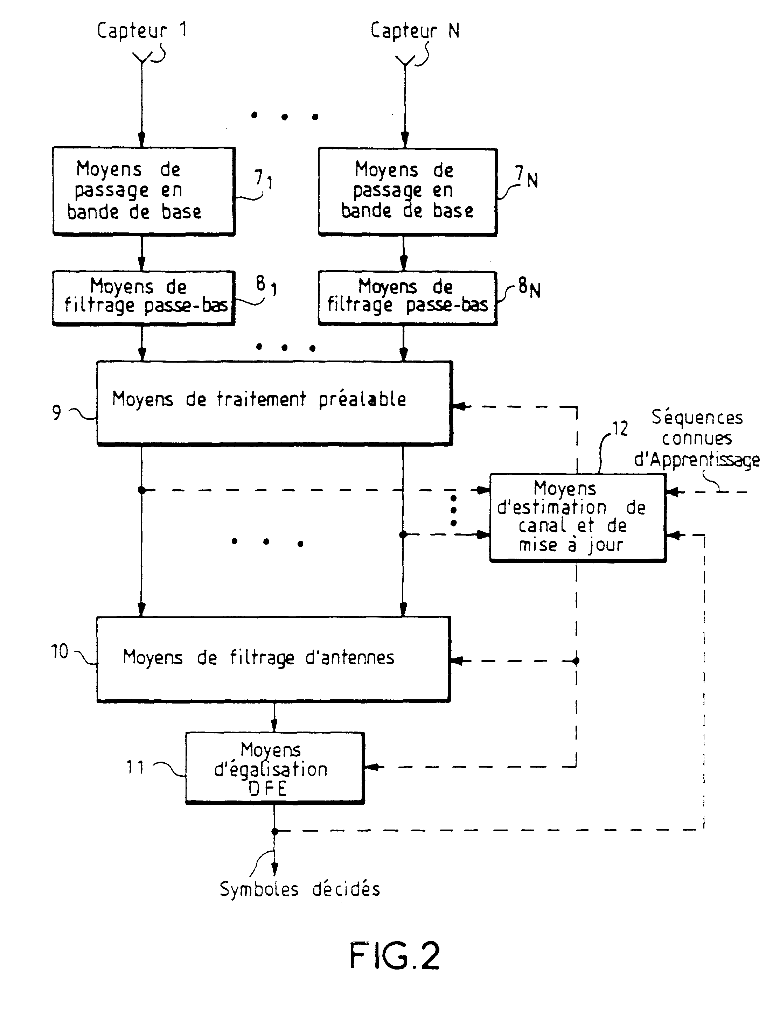

Un mode de réalisation d'un récepteur radioélectrique selon l'invention illustré à la figure 2 qui comporte un égaliseur DFE, est donné dans le contexte des transmissions HF utilisant une modulation QPSK et un filtre d'émission en cosinus surélevé de coefficient d'arrondi 0,25 et dont la bande à 3dB est de 2 400 Hz. Le débit est de 2 400 bauds, et les symboles transmis sont organisés en trames. Outre les séquences constituées des symboles d'information (symboles dits utiles), chaque trame comporte des séquences connues d'apprentissage. Un réseau d'un nombre **N** déterminé de capteurs de caractéristiques identiques placées en différents points est utilisé. Il est également supposé que la synchronisation de la transmission en présence d'interférences est préalablement effectuée par n'importe quel procédé connu de synchronisation, robuste au brouillage, sur les séquences d'apprentissage.

Dans ce mode de réalisation, chaque étape 1 à 6 du procédé selon l'invention est respectivement mis en oeuvre par un ou plusieurs moyens décrits ci-après.

L'étape 1 de transformation en bande de base est mise en oeuvre par des moyens de passage en bande de base $7_1$ à $7_N$ disposés respectivement sur chaque voie de réception formée respectivement par chaque capteur 1 à N. La sortie de chaque moyen, $7_1$ à $7_N$, est couplée respectivement à des moyens de filtrage passe-bas $8_1$ à $8_N$, mettant en oeuvre l'étape 2 du procédé selon l'invention. L'étape 3 du procédé est mise en oeuvre par des moyens de traitement préalable 9 qui reçoivent sur leur entrée les différents signaux issus de chaque voie après filtrage.

Les moyens de traitement préalable 9 sont couplés en sortie à des moyens de filtrage d'antennes 10 mettant en oeuvre l'étape 4 du procédé selon l'invention et qui sont eux mêmes couplés en sortie à des moyens d'égalisation DFE 11 mettant en oeuvre l'étape 5 du procédé selon l'invention. Des moyens d'estimation de canal et de mise à jour des traitements 12 mettent en oeuvre l'étape 6 du procédé, recevant respectivement sur une première série d'entrées, les signaux respectifs à chacune des voies prétraitées par les moyens de traitement préalable 9 recevant sur une deuxième entrée les séquences connues d'apprentissage et sur une troisième entrée l'information "symboles décidés" délivrée en sortie des moyens d'égalisation DFE 11. Les moyens d'estimation et de mise à jour 12 délivrent respectivement une information de mise à jour sur les moyens de traitement préalable 9, sur les moyens 10 et 11 de filtrage d'antennes et d'égalisation DFE.

Le cheminement du flux des données reçues et émises par les moyens d'estimation de canal et de mise à jour 12 est représenté par des flèches discontinues.

Le fonctionnement détaillé des principaux moyens utilisés par le récepteur selon l'invention est détaillé ci-après.

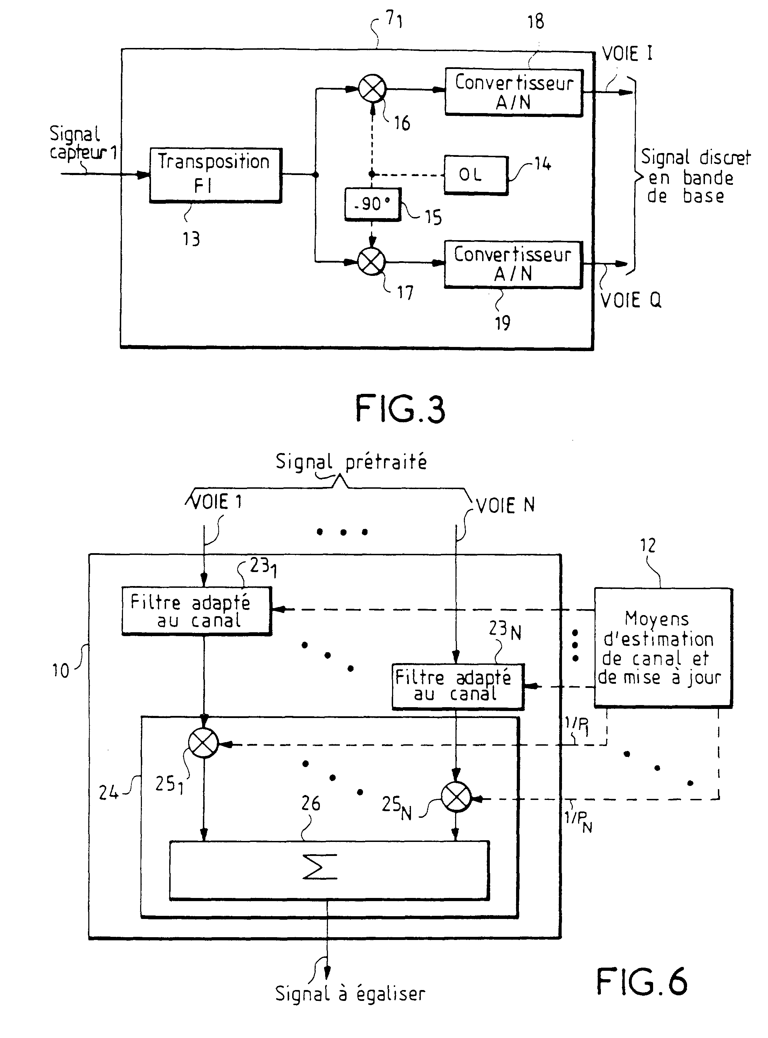

La figure 3, illustre le schéma fonctionnel d'un moyen de passage en bande de base $7_1$ identique aux autres moyens $7_2$ à $7_N$ qui ne sont donc pas décrits.

Après les avoir transposés en fréquence intermédiaire FI par des moyens de transposition 13, les signaux issus des différentes voies couplées respectivement à chaque capteur 1 à N sont transformés en signaux discrets équivalents en bande de base par l'intermédiaire d'un oscillateur local OL 14, d'un déphaseur et de deux mélangeurs 16 et 17 créant respectivement une première voie en phase I et une deuxième voie Q en quadrature de phase avec le signal d'entrée. Les signaux délivrés par chaque mélangeurs 16 et 17 sont respectivement discrétisés, par exemple à 9 600 Hz, par un convertisseur analogique/numérique CAN 18 et 19.

Un filtrage passe-bas est effectué sur chacun des signaux discrets. Dans l'exemple traité, les moyens de filtrage passe-bas $8_1$ à $8_2$ comportent un filtre de Butterworth d'ordre 6 de bande 3 kHz à 3 dB. Le signal après filtrage est décimé d'un facteur 2 pour être délivré à 4 800 Hz dans l'exemple traité, ce qui correspond à deux fois le débit symbole de 2 400 bauds.

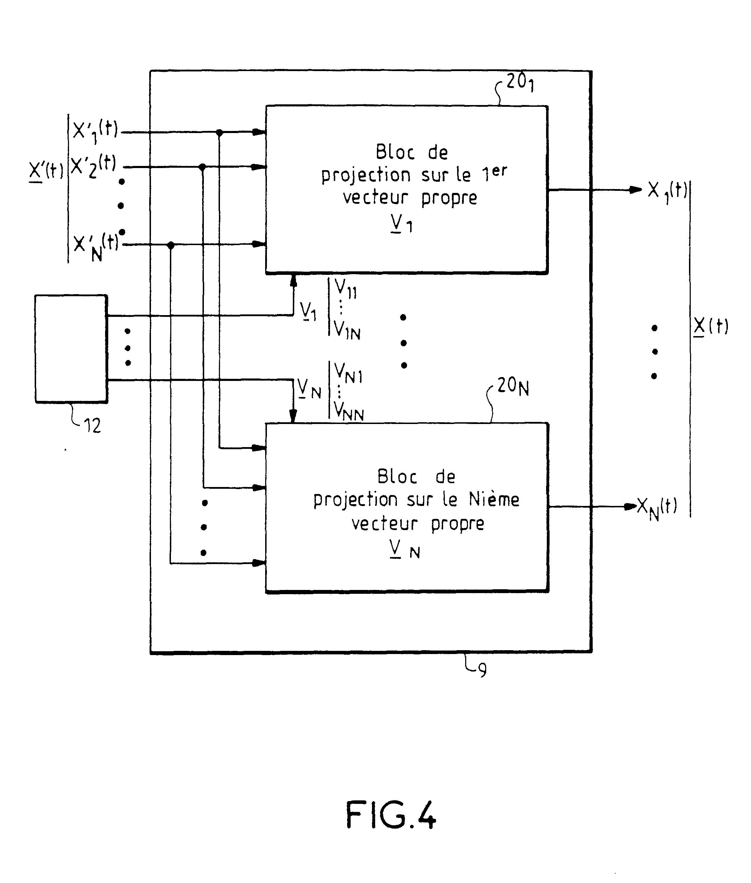

Les moyens de traitement préalable 9 comportent des blocs de projection $20_1$ à $20_N$ illustrés à la figure 4 recevant à chaque instant t, respectivement sur leurs entrées, les composantes d'un vecteur $\underline{x}'(t)$ représentatif du vecteur des N signaux $x'_n(t)$ associés aux N capteurs, avec n=1 à N. La sortie de chaque bloc de projection, $20_1$ à $20_N$, délivre respectivement une composante du vecteur projeté $\underline{x}(t)$ soit $x_1(t)$ à $x_N(t)$.

Des vecteurs $\underline{v}_n$ correspondant aux vecteurs propres de la matrice de corrélation spatiale du bruit de fond plus interférences sont fournis au début du traitement de la trame courante lors de la mise à jour du traitement préalable par les moyens d'estimation de canal et de mise à jour 12, et sont utilisés sur toute la trame. La mise à jour des traitements est décrite ultérieurement.

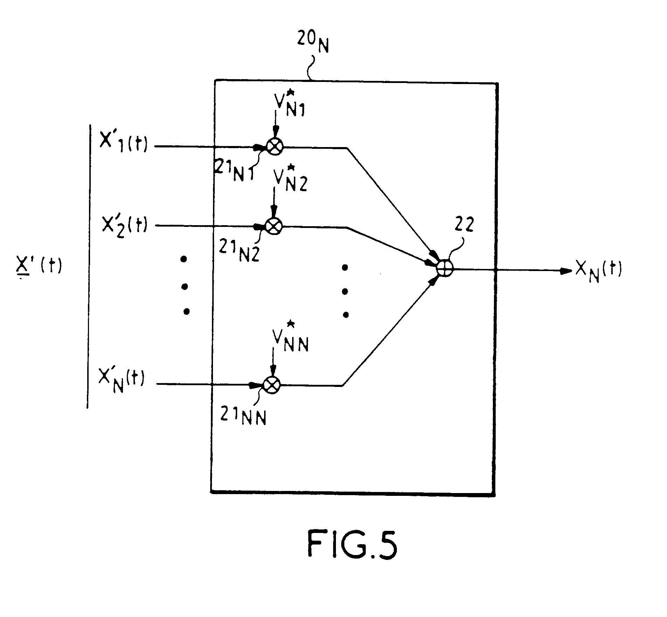

Chaque bloc de projection identique les uns aux autres, dont le $N^{ième}$ bloc $20_N$ et illustré à la figure 5, comporte respectivement en entrée, un opérateur de multiplication complexe $21_{N1}$ à $21_{NN}$. Chaque opérateur $21_{N1}$ à $21_{NN}$ reçoit respectivement dans l'ordre, sur une première entrée d'opérande, une composante du vecteur $\underline{x}'(t)$, soient $x'_1$ à $x'_N$ (t), et reçoit sur une deuxième entrée d'opérande respectivement une composante conjuguée d'un vecteur propre $\underline{v}_N$,

soient $v^*_{N1}$ à $v^*_{NN}$. La sortie de chaque opérateur $21_{N1}$ à $21_{NN}$ est couplée sur un additionneur 22 qui délivre en sortie une des composantes du vecteur $\underline{x}(t)$, ici $x_N(t)$.

Les moyens de traitement préalable 9 réalisent donc l'opération vectorielle suivante :

$$\underline{x}(t)=[\underline{v}_1 \ \underline{v}_2 ... \underline{v}_N]^+ \underline{x}'(t) \tag{1}$$

où + en exposant désigne l'opérateur de transposition-conjugaison dans l'espace vectoriel.

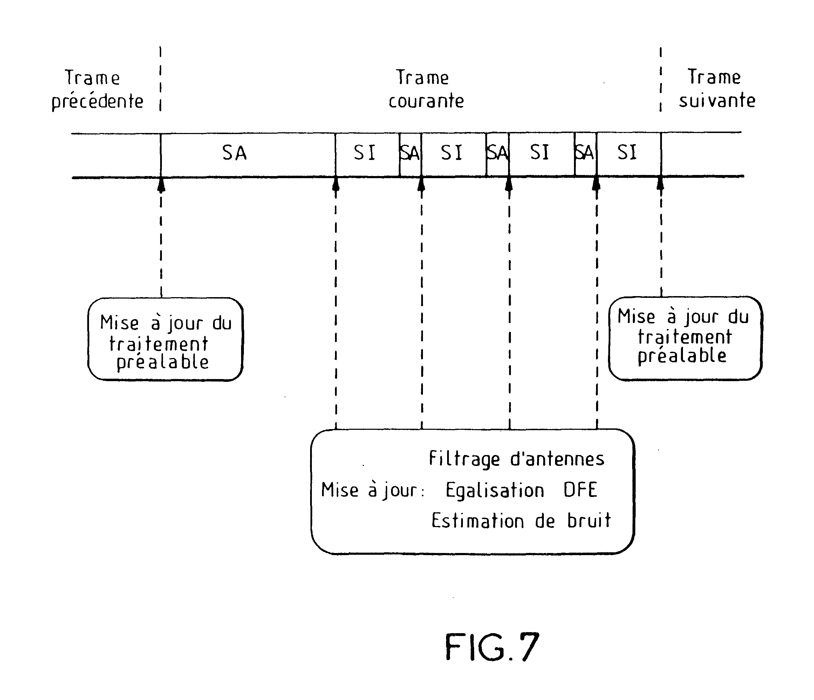

Les moyens de filtrage d'antennes 10 illustrés à la figure 6 comportent sur chacune des voies prétraitées VOIE 1 à VOIE N respectivement un filtre adapté $23_1$ à $23_N$ à chaque canal qui reçoit respectivement en entrée le signal issu de chaque voie VOIE 1 à VOIE N et qui effectue un filtrage adapté au canal résultant $c_n(t)$. La réponse impulsionnelle $c_n(t)$ est fournie périodiquement durant le traitement de la trame par les moyens d'estimation de canal et de mise à jour 12. Cet échange est symbolisé par une flèche en trait interrompu. Ainsi l'opération de filtrage adapté sur les voie VOIE 1 à VOIE N dont le résultat est délivré au rythme symbole, est décrite par la formule suivante:

$$y_n(2p) = c^*_n(-t)_* x_n(t)\big|_{t=2p} \tag{2}$$

où * en exposant désigne la conjugaison complexe, et $*$ désigne l'opération de convolution discrète. Afin d'avoir un filtre causal, un retard de la durée de la réponse impulsionnelle du canal est introduit.

La combinaison des sorties des filtres adaptés $23_1$ à 23N est mise en oeuvre par des moyens de combinaison 24 couramment désignée en égalisation à diversité par "Maximal Ratio Combining" (MRC), la sortie de chaque filtre $23_1$ à $23_N$ est pondérée par l'inverse de la puissance du bruit $1/_{p1}$ à $1/_{pN}$ présent respectivement en sortie de chaque filtre. Cette pondération est symbolisée par un opérateur de multiplication, $25_1$ à $25_N$, recevant respectivement sur une première entrée d'opérande le signal issu de chaque filtre adapté $23_1$ à $23_N$ et sur une deuxième entrée d'opérande l'inverse de la puissance du bruit, $1/_{p1}$ à $1/_{pN}$, issu des moyens d'estimation de canal et de mise à jour 12. Une estimée de cette puissance de bruit, notée $p_n$, avec n=1 à N, est fournie au début du traitement de la trame et elle est utilisée ensuite sur toute la trame. Les signaux issus respectivement de chaque opérateur $25_1$ à $25_N$ sont ensuite sommés par un additionneur 26.

Le résultat de la combinaison, noté $z_p$, s'exprime alors par la formule suivante :

$$z_p = \sum_{n=1}^{N} \frac{1}{p_n} y_n(2p) \tag{3}$$

Les moyens d'égalisation DFE 11 sont constitués d'un filtre transverse et d'un filtre récursif non représentés. Le signal d'entrée du filtre transverse est le signal issu des moyens de filtrage d'antennes 10 précédemment décrits. L'entrée du filtre récursif est formée des symboles connus des séquences d'apprentissage et des symboles décidés. La partie transverse de l'égalisation DFE introduit un retard supplémentaire de la durée de celle-ci.

Les coefficients des filtres transverse et récursif sont mis à jour périodiquement durant le traitement d'une trame à l'aide des moyens d'estimation de canal et de mise à jour 12.

L'estimation de la réponse impulsionnelle du canal après traitement préalable relatif à la voie n, notée $c_n(t)$, est faite par exemple à l'aide d'un algorithme des moindres carrés récursifs de type Gram-Schmidt modifié. Ainsi, en reprenant les notations précédentes, l'estimée $c_n(t)$ optimise le critère des moindres carrés appliqué à l'erreur :

$$e_n(t)=x_n(t)-c_n(t)^*s(t) \tag{4}$$

où s(t) désigne le signal échantillonné à 4 800 Hz dans l'exemple précité et constitué des symboles transmis intercalés de zéros. La réponse impulsionnelle du canal est fournie échantillonnée à 4 800 Hz, soit deux fois le rythme symbole, ce qui correspond à la fréquence d'échantillonnage en sortie de moyens de filtrage passe-bas $8_1$ à $8_N$.

Le signal s(t) est construit soit à partir des symboles connus s'ils sont disponibles, soit à partir des symboles décidés. Un retard d'estimation du canal est à prendre en compte du fait du retard engendré par les filtres adaptés aux canaux $23_1$ à $23_N$ et par les moyens d'égalisation DFE 11. Pour le compenser, le sous-ensemble formé des moyens de filtrage d'antennes 10 et d'égalisation DFE 11 est dédoublé. Le sous-ensemble dont le rôle est de fournir le signal s(t) permettant d'estimer la réponse impulsionnelle des canaux est en avance relativement au sous-ensemble qui décide effectivement les symboles transmis. Cette avance est fixée à la moitié du retard engendré par les filtres adaptés aux canaux $23_1$ à $23_N$ et par les moyens d'égalisation DFE 11.

Un exemple de séquencement de la mise à jour des traitements réalisée dans l'étape 6 du procédé selon l'invention est illustré à la figure 7.

Le traitement préalable 3 est mis à jour au début de chaque trame comportant des séquences d'apprentissage SA formées des symboles connus et des séquences d'information formées des symboles utiles. Le filtrage d'antennes 4 et l'égalisation 5 le sont au début de chacune des séquences d'information SI. Il en est de même pour le canal utilisé par l'estimation du bruit prétraité.

Pour mettre à jour trame par trame le traitement préalable décrit par la formule (1), les moyens d'estimation de canal et de mise à jour 12 évaluent sur la trame courante la matrice de corrélation spatiale résiduelle, c'est-à-dire après traitement préalable, la matrice du bruit de fond plus interférences, notée $R_b$. Si le traitement préalable 3 est adapté à l'environnement courant de brouillage, alors la matrice $R_b$ est diagonale. La mise à jour du traitement préalable 3 s'effectue au début de la trame suivante. Elle consiste à effectuer la décomposition en valeurs propres $p_n$ et vecteurs propres $\underline{u}_n$ de la matrice de corrélation spatiale résiduelle $R_b$ puis consiste à multiplier la matrice de changement de base présentée en (1) par celle des vecteurs $\underline{u}_n$.

Pour évaluer la corrélation spatiale du bruit de fond plus interférences après traitement préalable 3, la composante bruit de fond plus interférences $b_n(t)$ du signal observé $x_n(t)$ est estimée à partir d'une estimée de la réponse impulsionnelle $c_n(t)$ du canal correspondant à la Nième voie, en sortie du traitement :

$$b_n(t) = x_n(t) - c_n(t) * s(t) \qquad (5)$$

La matrice $R_b$ définie auparavant est estimée par la moyenne temporelle sur la trame courante :

$$R_b = \frac{1}{K} \sum_{t=1}^{K \text{ échantillons}} \underline{b}(t)\,\underline{b}(t)^+ \qquad (6)$$

où $\underline{b}(t)$ est la concaténation des signaux $b_n(t)$ s'exprimant par la formule suivante :

$$\underline{b}(t) = [b_1(t)\ b_2(t)...b_N(t)]^T \qquad (7)$$

où T en exposant représente l'opération de transposition dans un espace vectoriel.

Les filtres adaptés aux canaux $23_1$ à $23_N$ modélisés par la formule (2) sont mis à jour périodiquement durant le traitement d'une trame de données à l'aide de l'estimation de canal 6. Les valeurs propres $p_n$ calculées lors de la mise à jour du traitement préalable 3 correspondent pour une trame à des estimées de la puissance de bruit de fond plus interférences dans la combinaison MRC du filtrage d'antennes 4, exprimée par la formule (3).

L'expression (4) de l'estimée du canal $c_n(t)$ sur chacune des voies, VOIE 1 à VOIE N, et l'expression (2) du filtre adapté $23_1$ à $23_N$ associé en fonction de celle-ci fournissent un modèle de l'IIS à traiter par les moyens d'égalisation DFE monodimensionnelle 11 au rythme symbole. Ainsi la réponse impulsionnelle du canal résultant, noté $h_p$, est estimée par la formule suivante:

$$h_p = \sum_{n=1}^{N} \frac{1}{p_n} c_n^*(-t) *_{\star} c_n(t)\Big|_{t=2p} \qquad (8)$$

Les filtres non représentés constituant les moyens d'égalisation DFE 11 sont calculés par exemple à partir de cette estimée selon la méthode décrite dans l'article de P.K. Shukla et L.F.Turner. La mise à jour des coefficients de ces filtres est faite consécutivement à celle des filtres adaptés aux canaux $23_1$ à $23_N$.

Le sous-ensemble dédoublé formé des moyens de filtrage d'antennes et d'égalisation DFE intégré dans l'estimation de canal est mis à jour de la même façon.

Deux modes de fonctionnement du récepteur selon l'invention sont à distinguer : le mode démarrage et le mode normal.

Le mode démarrage a pour but d'initialiser le traitement préalable 3 et le mode normal, décrit précédemment, à pour but de le mettre à jour tout en égalisant les signaux reçus.

En mode démarrage, seuls sont utilisés les symboles connus du récepteur qui sont contenus dans une séquence d'apprentissage SA. Les opérations suivantes sont effectuées successivement :

- la réponse impulsionnelle du canal sur chaque voie est estimée sur toute la séquence d'apprentissage SA, à partir des signaux échantillonnés à deux fois le rythme symbole issus du filtrage passe-bas 2
- ensuite, pour chaque échantillon relatif à la séquence d'apprentissage SA, la composante bruit de fond plus interférences est estimée de la façon décrite en (5). Et la matrice de corrélation spatiale $R_b$, définie par les expressions (6) et (7), est calculée,
- alors, la décomposition en valeurs propres et vecteurs propres de la matrice $R_b$ est effectuée. Et la base de vecteurs propres utilisée par les moyens de traitement préalable 9 est initialisée,
- enfin, l'estimation 6 de la réponse impulsionnelle des canaux est réinitialisée.

Une fois les opérations de démarrage effectuées, le traitement se synchronise au début des signaux reçus et se poursuit en mode normal.

L'invention n'est pas limitée au mode de réalisation précédemment décrit :

- les voies peuvent être sommées à partir d'une ou plusieurs antennes colocalisées de diagrammes de rayonnement différents,
- le traitement préalable peut être élaboré en absence de signal utile (dans les communications avec évasion de fréquence par exemple), en déterminant directement la corrélation spatiale du bruit de fond plus interférences,
- le filtre adapté au canal peut tenir compte de la corrélation temporelle du bruit, en déterminant le filtre prédicteur de la composante bruit de fond plus interférences estimée,
- la combinaison des sorties des filtres adaptés effectués sur chaque voie peut être de type "Equal Gain Combining" (EGC), ou "Selection Combining" (SC), ou d'un type dérivé des trois types déjà cités,
- l'égalisation monodimensionnelle peut être réalisée par un algorithme de Viterbi ou par une version simplifiée de celui-ci M-algorithme par exemple,
- l'égaliseur monodimensionnel peut être auto-adaptatif, et
- l'estimation de canal peut être réalisée par tout autre algorithme.

**Revendications**

**1.** Procédé permettant une égalisation multivoie consistant en une estimation d'un canal de transmission d'un signal radioélectrique numérique organisé en trames successives comportant au moins une séquence d'apprentissage formée de symboles connus et une séquence d'information formée de symboles utiles, **caractérisé, en ce qu'**il consiste, en présence de multitrajets de propagation et d'interférences, :

- à transformer (1) le signal radioélectrique reçu sur au moins deux voies de réception d'au moins une antenne, en un signal équivalent en bande de base et discrétisé,
- à filtrer (2) par un filtrage passe-bas chaque signal discrétisé en bande de base,
- dans un traitement préalable (3), à décorréler spatialement la composante bruit de fond plus interférences du signal reçu,
- à filtrer et à combiner par un filtrage d'antennes (4), les signaux issus de chaque canal estimé,
- à calculer (5) à partir des estimées du canal de transmission correspondant respectivement à chacune des voies, une égalisation monodimensionnelle au rythme symbole, qui décide des symboles transmis,
- à estimer (6) le canal de transmission à partir de chacune des voies prétraitées,
- et à mettre à jour suivant un séquencement déterminé des trames, le traitement préalable (3), le filtrage d'antennes (4) et l'égalisation (5), ainsi que l'estimation du bruit porté par chaque canal après le traitement préalable (3), à partir de l'estimation de canal (6).

**2.** Procédé selon la revendication 1, **caractérisé en ce que** le traitement préalable (3) consiste à projeter les signaux reçus sur chaque voie de réception sur une base formée des vecteurs propres de la matrice de corrélation spatiale du bruit de fond plus interférences.

**3.** Procédé selon la revendication 1, **caractérisé en ce que** le filtrage d'antennes (4) consiste à effectuer un filtrage adapté à chaque canal résultant ($c_n(t)$) de l'étape d'estimation (6), et à additionner les sorties de chaque canal ($c_n(t)$) après les avoir respectivement pondérés par l'inverse de la puissance du bruit présent sur chaque canal ($c_n(t)$).

**4.** Procédé selon la revendication 1, **caractérisé en ce que** l'égalisation monodimensionnelle (5) est fondée sur une égalisation DFE.

**5.** Procédé selon la revendication 1, **caractérisé en ce que** l'égalisation monodimensionnelle (5) est fondée sur un algorithme de Viterbi.

**6.** Procédé selon la revendication 1, **caractérisé en ce qu'**il consiste pour la mise à jour (6) du traitement préalable (3), à évaluer sur la trame courante la matrice de corrélation spatiale du bruit de fond plus interférences après traitement préalable.

**7.** Procédé selon la revendication 1, **caractérisé en ce que** la mise à jour est effectuée au début de chaque trame, pour le traitement préalable (3), **en ce qu'**elle est effectuée au début de chacune des séquences d'information, formée des symboles utiles, pour le filtrage d'antennes (4), l'égalisation (5) et l'estimation du bruit après le traitement préalable (3).

**8.** Procédé selon la revendication 1, **caractérisé en ce que** l'estimation (6) du canal de transmission relatif à chaque voie prétraitée est faite à l'aide d'un algorithme des moindres carrés.

**9.** Récepteur radioélectrique multivoie mettant en oeuvre une égalisation à diversité spatiale fondée sur une estimation du canal de transmission, et recevant un signal radioélectrique numérique organisé en trames successives comportant au moins une séquence d'apprentissage formée de symboles connus du récepteur et une séquence d'information formée de symboles utiles, **caractérisé en ce que** le récepteur comporte, pour l'estimation du canal de transmission en présence d'interférences et de multitrajets de propagation :

- au moins deux capteurs formant chacun une voie de réception,
- des moyens ($7_1$ à $7_N$) de transformation du signal reçu sur chaque voie en un signal équivalent en bande de base discrétisé,
- des moyens de filtrage ($8_1$ à $8_N$) comportant un filtre passe-bas disposé sur chaque voie, pour filtrer chaque signal discrétisé en bande de base,
- des moyens de traitement préalable (9) des signaux associés respectivement à chaque capteur comportant des blocs de projection ($20_1$ à $20_N$) projetant les signaux issus des filtres passe-bas sur une base formée des vecteurs propres d'une matrice de corrélation spatiale du bruit de fond plus interférences,
- des moyens d'estimation (12) du canal de transmission associé à chaque voie après traitement préalable,
- des moyens d'estimation du bruit présent sur chaque canal après traitement préalable,
- des moyens de filtrage d'antennes (10) comportant un filtre adapté ($23_1$ à $23_N$) à chaque canal et des moyens de combinaison (24) des signaux de sorties respectifs à chaque filtre ($23_1$ à $23_N$) échantillonnés au rythme symbole et pondérés par l'inverse de leur puissance de bruit calculée par les moyens d'estimation de canal de mise à jour (12), permettant de combattre conjointement les interférences et les multitrajets de propagation,
- des moyens d'égalisation (11) monodimensionnelle calculant l'égalisation directement à partir des estimées du canal correspondant respectivement à chacune des voies et permettant de réduire l'Interférence Inter-Symbole, IIS, et de décider des symboles transmis, et
- des moyens de mise à jour (12) des moyens de traitement préalable (9), des moyens de filtrage d'antennes (10), des moyens d'égalisation (11), et des moyens d'estimation du bruit présent sur chaque canal, suivant un séquencement déterminé.

**10.** Récepteur selon la revendication 9, **caractérisé en ce que** les moyens d'égalisation monodimensionnelle (11) comportent un égaliseur DFE.

**11.** Récepteur selon la revendication 9, **caractérisé en ce que** les moyens d'égalisation modimensionnelle (11) comportent un égaliseur de Viterbi.

**Patentansprüche**

1. Verfahren, das eine Mehrweg-Entzerrung ermöglicht, bestehend aus der Schätzung eines Kanals zur Übertragung eines digitalen Funksignals, das in aufeinanderfolgenden Rahmen organisiert ist, die wenigstens eine aus bekannten Symbolen gebildete Lernsequenz, eine aus Nutzsymbolen gebildete Informationssequenz enthalten, **dadurch gekennzeichnet, daß** es bei Vorhandensein von Mehrfach-Ausbreitungswegen und von Interferenzen darin besteht:

   - das auf wenigstens zwei Empfangswegen wenigstens einer Antenne empfangene Funksignal in ein äquivalentes, diskretisiertes Signal im Grundband zu transformieren (1), und

   - jedes im Grundband diskretisierte Signal durch eine Tiefpaßfilterung zu filtern (2),

   - in einer Vorverarbeitung (3) die Hintergrund-Rauschkomponente zuzüglich Interferenzen des empfangenen Signals räumlich zu dekorrelieren,

   - durch eine Antennenfilterung (4) die von jedem geschätzten Kanal ausgegebenen Signale zu filtern und zu kombinieren,

   - anhand der Schätzungen des Übertragungskanals, die jeweils einem der Wege entsprechen, eine eindimensionale Entzerrung im Symboltakt, der die übertragenen Symbole bestimmt, zu berechnen (5),

   - den Übertragungskanal anhand jedes der vorverarbeiteten Wege zu schätzen (6),

   - und anhand der Schätzung (6) des Kanals die Vorverarbeitung (3), die Antennenfilterung (4) und die Entzerrung (5) sowie die Schätzung des von jedem Kanal nach der Vorverarbeitung (3) transportierten Rauschens entsprechend einer bestimmten Folge der Rahmen zu aktualisieren.

2. Verfahren nach Anspruch 1, **dadurch gekennzeichnet, daß** die Vorverarbeitung (3) darin besteht, die auf jedem Empfangsweg empfangenen Signale auf eine Basis zu projizieren, die aus Eigenvektoren der Matrix der räumlichen Korrelation des Hintergrundrauschens zuzüglich Interferenzen gebildet ist.

3. Verfahren nach Anspruch 1, **dadurch gekennzeichnet, daß** die Antennenfilterung (4) darin besteht, eine Filterung auszuführen, die an jeden Kanal ($c_n(t)$) angepaßt ist, der sich aus dem Schätzschritt (6) ergibt, und die Ausgänge jedes Kanals ($c_n(t)$) zu addieren, nachdem sie durch den Kehrwert der Leistung des Rauschens, das in jedem Kanal ($c_n(t)$) vorhanden ist, gewichtet worden sind.

4. Verfahren nach Anspruch 1, **dadurch gekennzeichnet, daß** die eindimensionale Entzerrung (5) auf einer DFE-Entzerrung basiert.

5. Verfahren nach Anspruch 1, **dadurch gekennzeichnet, daß** die eindimensionale Entzerrung (5) auf einem Viterbi-Algorithmus basiert.

6. Verfahren nach Anspruch 1, **dadurch gekennzeichnet, daß** es für die Aktualisierung (6) der Vorverarbeitung (3) darin besteht, im momentanen Rahmen die Matrix der räumlichen Korrelation des Hintergrundrauschens zuzüglich Interferenzen nach der Vorverarbeitung zu bewerten.

7. Verfahren nach Anspruch 1, **dadurch gekennzeichnet, daß** die Aktualisierung für die Vorverarbeitung (3) am Beginn jedes Rahmens erfolgt und daß sie für die Antennenfilterung (4), die Entzerrung (5) und die Rauschschätzung nach der Vorverarbeitung (3) am Beginn jeder der aus den Nutzsymbolen gebildeten Informationssequenzen erfolgt.

8. Verfahren nach Anspruch 1, **dadurch gekennzeichnet, daß** die Schätzung (6) des Übertragungskanals in bezug auf jeden vorverarbeiteten Weg mit Hilfe eines Algorithmus der kleinsten Quadrate erfolgt.

9. Mehrweg-Funkempfänger, der eine Entzerrung mit räumlicher Diversity ausführt, die auf einer Schätzung des Übertragungskanals basiert, und der ein digitales Funksignal, das in aufeinanderfolgenden Rahmen organisiert ist, die wenigstens eine Lernsequenz, die aus bekannten Symbolen des Empfängers gebildet ist, und aus einer Informationssequenz, die aus Nutzsymbolen gebildet ist, enthalten, empfängt, **dadurch gekennzeichnet, daß** der Empfänger für die Schätzung des Übertragungskanals bei Vorhandensein von Interferenzen und von Mehrfach-Ausbreitungswegen umfaßt:

- wenigstens zwei Aufnehmer, die jeweils einen Empfangsweg bilden,

- Mittel ($7_1$ bis $7_N$) zur Transformation des auf jedem Kanal empfangenen Signals in ein äquivalentes diskretisiertes Signal im Grundband,

- Filterungsmittel ($8_1$ bis $8_N$), die ein Tiefpaßfilter enthalten, das in jedem Weg angeordnet ist, um jedes diskretisierte Signal im Grundband zu filtern,

- Signalvorverarbeitungsmittel (9), die jeweils einem Aufnehmer zugeordnet sind und Projektionsblöcke ($20_1$ bis $20_N$) enthalten, die die von den Tiefpaßfiltern ausgegebenen Signale auf eine Basis projizieren, die aus Eigenvektoren einer Matrix zur räumlichen Korrelation des Hintergrundrauschens zuzüglich Interferenzen gebildet ist,

- Mittel (12) zum Schätzen des Übertragungskanals, der jedem Weg nach der Vorverarbeitung zugeordnet wird,

- Mittel zum Schätzen des Rauschens, das auf jedem Kanal nach der Vorverarbeitung vorhanden ist,

- Mittel (10) zur Antennenfilterung, die ein Filter ($23_1$ bis $23_N$), das an jeden Kanal angepaßt ist, und Mittel (24) zur Kombination der entsprechenden Ausgangssignale jedes Filters ($23_1$ bis $23_N$), die im Symboltakt abgetastet werden und durch den Kehrwert ihrer Rauschleistung gewichtet sind, die durch die Aktualisierungs-Kanalschätzmittel (12) berechnet wird, enthalten und die gemeinsame Unterdrückung der Interferenzen und der Mehrfachausbreitungswege ermöglichen,

- Mittel (11) zur eindimensionalen Entzerrung, die die Entzerrung direkt anhand der Kanalschätzungen, die jeweils einem der Wege entsprechen, berechnen und die Verringerung der Zwischensymbol-Interferenzen, IIS, sowie die Bestimmung der übertragenen Symbole ermöglichen, und

- Mittel (12) zur Aktualisierung der Vorverarbeitungsmittel (9), der Antennenfilterungsmittel (10), der Entzerrungsmittel (11) und der Mittel zum Schätzen des auf jedem Kanal vorhandenen Rauschens entsprechend einer vorgegebenen Folge.

**10.** Empfänger nach Anspruch 9, **dadurch gekennzeichnet, daß** die Mittel (11) zur eindimensionalen Entzerrung einen DFE-Entzerrer enthalten.

**11.** Empfänger nach Anspruch 9, **dadurch gekennzeichnet, daß** die Mittel (11) zur eindimensionalen Entzerrung einen Viterbi-Entzerrer enthalten.

**Claims**

**1.** Method allowing multipathway equalization consisting of an estimation of a channel for transmitting a digital radio-electric signal organized as successive frames comprising at least one learning sequence formed of known symbols and an information sequence formed of useful symbols, **characterized, in that** it consists, in the presence of propagation multipaths and interference,:

- in transforming (1) the radio-electric signal received on at least two reception pathways of at least one antenna, into a discretized baseband equivalent signal,
- in filtering (2) through a low-pass filtering each baseband discretized signal,
- within a prior processing (3), in spatially decorrelating the background noise plus interference component of the signal received,
- in filtering and in combining through an antenna filtering (4), the signals emanating from each estimated channel,
- in calculating (5) from the estimates of the transmission channel corresponding respectively to each of the pathways, a one-dimensional equalization at the symbol rate, which decides the symbols transmitted,

- in estimating (6) the transmission channel from each of the pre-processed pathways,
- and in updating according to a specified sequencing of the frames, the prior processing (3), the antenna filtering (4) and the equalization (5), as well as the estimation of the noise carried by each channel after the prior processing (3), from the channel estimation (6).

2. Method according to Claim 1, **characterized in that** the prior processing (3) consists in projecting the signals received on each reception pathway onto a basis formed of the eigenvectors of the spatial correlation matrix of the background noise plus interference.

3. Method according to Claim 1, **characterized in that** the antenna filtering (4) consists in performing a filtering matched to each resulting channel ($c_n(t)$) of the estimation step (6) and in adding up the outputs from each channel ($c_n(t)$) after having weighted them respectively by the inverse of the power of the noise present on each channel ($c_n(t)$).

4. Method according to Claim 1, **characterized in that** the one-dimensional equalization (5) is based on a DFE equalization.

5. Method according to Claim 1, **characterized in that** the one-dimensional equalization (5) is based on a Viterbi algorithm.

6. Method according to Claim 1, **characterized in that** in respect of the updating (6) of the prior processing (3), it consists in evaluating over the current frame the spatial correlation matrix of the background noise plus interference after prior processing.

7. Method according to Claim 1, **characterized in that** the updating is performed at the start of each frame, for the prior processing (3), **in that** it is performed at the start of each of the information sequences, formed of the useful symbols, for the antenna filtering (4), the equalization (5) and the estimation of the noise after the prior processing (3).

8. Method according to Claim 1, **characterized in that** the estimation (6) of the transmission channel relating to each pre-processed pathway is carried out with the aid of a least squares algorithm.

9. Multipathway radio-electric receiver implementing spatial diversity equalization based on estimation of the transmission channel, and receiving a digital radio-electric signal organized as successive frames comprising at least one learning sequence formed of symbols known to the receiver and an information sequence formed of useful symbols, **characterized in that** the receiver comprises, for the estimation of the transmission channel in the presence of interference and propagation multipaths:

- at least two sensors each forming a reception pathway,
- means ($7_1$ to $7_N$) of transforming the signal received on each pathway into a discretized baseband equivalent signal,
- filtering means ($8_1$ to $8_N$) comprising a low-pass filter disposed on each pathway, for filtering each baseband discretized signal,
- means of prior processing (9) of the signals associated respectively with each sensor comprising projection blocks ($20_1$ to $20_N$) projecting the signals emanating from the low-pass filters onto a basis formed of the eigenvectors of a spatial correlation matrix of the background noise plus interference,
- means of estimation (12) of the transmission channel associated with each pathway after prior processing,
- means of estimation of the noise present on each channel after prior processing,
- means of antenna filtering (10) comprising a filter matched ($23_1$ to $23_N$) to each channel and means of combining (24) the respective output signals with each filter ($23_1$ to $23_N$) which are sampled at the symbol rate and weighted by the inverse of their noise power calculated by the updating channel estimation means (12), making it possible to combat the interference and the propagation multipaths conjointly,
- means of one-dimensional equalization (11) calculating the equalization directly from the estimates of the channel corresponding respectively to each of the pathways and making it possible to reduce the Inter-Symbol Interference, ISI, and to decide the symbols transmitted, and
- means of updating (12) the prior processing means (9), the antenna filtering means (10), the equalization means (11) and the means of estimating the noise present on each channel, according to a specified sequencing.

**10.** Receiver according to Claim 9, **characterized in that** the means of one-dimensional equalization (11) comprise a DFE equalizer.

**11.** Receiver according to Claim 9, **characterized in that** the means of one-dimensional equalization (11) comprise a Viterbi equalizer.

Signal reçu

```
          ┌──────────────────────┐
          │   TRANSFORMATION     │
          │        EN            │ ⟋ 1
          │  BANDE DE BASE       │
          └──────────────────────┘

          ┌──────────────────────┐
          │     FILTRAGE         │ ⟋ 2
          │   PASSE-BAS          │
          └──────────────────────┘

     3 ⟋  ┌──────────────────────┐
          │    TRAITEMENT        │
          │    PRÉALABLE         │
          └──────────────────────┘
```

Séquences connues

```
                              ┌──────────────────────┐
                              │  ESTIMATION ET       │
                              │  MISE A JOUR         │
                              └──────────────────────┘
                                              ⟋ 6
```

```
     4 ⟋  ┌──────────────────────┐
          │     FILTRAGE         │
          │   D'ANTENNES         │
          └──────────────────────┘

     5 ⟋  ┌──────────────────────┐
          │   EGALISATION        │
          │ MONODIMENSIONNELLE   │
          └──────────────────────┘
```

Symboles décidés

# FIG.1

FIG.2

**FIG.3**

Signal prétraité

**FIG.6**

Signal à égaliser

$X'(t) \begin{vmatrix} X'_1(t) \\ X'_2(t) \\ \vdots \\ X'_N(t) \end{vmatrix}$

Bloc de
projection sur le 1er
vecteur propre
$\underline{V}_1$

$20_1$

$X_1(t)$

$\underline{V}_1 \begin{vmatrix} V_{11} \\ \vdots \\ V_{1N} \end{vmatrix}$

$\underline{V}_N \begin{vmatrix} V_{N1} \\ \vdots \\ V_{NN} \end{vmatrix}$

12

Bloc de
projection sur le Nième
vecteur propre
$\underline{V}_N$

$20_N$

$X_N(t)$

$\underline{X}(t)$

9

FIG.4

FIG.5

FIG.7